# EUROPEAN PATENT SPECIFICATION

(11) **EP 0 781 642 B1**
(45) Date of publication and mention of the grant of the patent: **23.04.2003**
(21) Application number: 95120574.9
(22) Date of filing: 27.12.1995
(51) Int. Cl.: B29C 47/24

(54) **Method and an apparatus for manufacturing pipes of plastic, and a plastic pipe**
Verfahren und Vorrichtung zur Herstellung von Plastikrohren, und eine Plastikrohr
Procédé et appareil pour la production de tubes en matière plastique, et un tube plastique

(43) Date of publication of application: 02.07.1997
(73) Proprietor: Uponor Innovation AB, 513 81 Fristad (SE)
(72) Inventor: Järvenkylä, Jyri, FIN - 15870 Hollola (FI)
(74) Representative: Splanemann Reitzner Baronetzky Westendorp Patentanwälte

(56) References cited:
- WO-A-95/01251
- GB-A- 1 166 398
- US-A- 3 464 450
- US-A- 4 646 618
- PATENT ABSTRACTS OF JAPAN vol. 006, no. 224 (M-170), 9 November 1982 & JP-A-57 126627 (MATSUSHITA DENKO KK), 6 August 1982,

## Description

The invention relates to a method for manufacturing plastic pipes comprising a smooth inner and outer surface and at least one cavity having the shape of a helix and being located in the pipe wall, the turns of the cavity being separated by means of a partition which interconnects the outer and inner wall of the pipe wall, whereupon plastic material is fed through an annular space located between a tubular casing and a core contained therein, and the cavity is formed by means of a mandrel that is caused to rotate with respect to the casing and the core.

The invention further relates to an apparatus for manufacturing pipes of plastic, the apparatus comprising a substantially tubular casing, a core that is situated in the casing, that is substantially parallel with the axis of the casing, and that forms an annular space with the casing, and at least one mandrel that is rotatable with respect to the casing and the core and surrounds the core.

The invention also relates to a plastic pipe comprising a smooth inner and outer wall, and at least one partition that is situated between the walls, that has the shape of a helix, and that is attached to the outer and inner wall.

Plastic pipes with homogenous walls are both heavy and expensive, especially when they are large in size. Therefore, pipes with a wall consisting of two surface layers have been developed, openings or a lighter material layer being provided between the two layers. This kind of structure provides a pipe that is substantially as rigid as a pipe with a homogenous wall in the direction of both the axis and the radius, but that is considerably lighter. The layered structure also means that less material is needed. To counterbalance these advantages, however, the extruders required for manufacturing such pipes have a rather complicated structure.

US Patent 4,364,882 discloses an extruder by means of which pipes having smooth outer and inner surfaces and a foam layer therebetween can be manufactured. Due to the weight of the foam, in most cases the total amount of the weight saved is no more than 30%. Dutch Patent Application 7,500,386 discloses an extrusion technique by means of which smooth pipes with longitudinal apertures in the walls are produced. However, the rigidity of such pipes in the direction of the radius is small. It is also known to manufacture pipes with a corrugated interior or exterior, such as Swedish Patent 7500855-7 discloses, but the use of pipes with a corrugated surface is quite limited. It is naturally possible to form a smooth outer surface in a ribbed pipe of the kind described for example in WO 81/00823, but this requires two separate manufacturing stages, which considerably increases the price of the final product and which may impair the mechanical properties of the pipe.

Plastic pipes are typically manufactured with extruders into which the plastic material is fed from the side. The plastic pipe will thus comprise at least one seam on the opposite side from the inlet. This jointing seam is highly disadvantageous especially when glass reinforcements are added to the plastic material.

Pipes with a smooth inner and outer surface and with walls comprising cavities of the shape of a helix are at present manufactured in such a way that a hollow profile having a square cross-section is extruded, it is twisted around a mandrel to have the shape of a helix, and its helical turns are welded together. This manufacturing method is quite slow, however, and the resultant product has an uneven outer surface. Furthermore, the welded joints between the turns weaken the product. Also, a welded joint having the shape of a helix essentially complicates the sealing of the pipe, whereupon leaks occur easily for example in the joints. This kind of manufacturing method is disclosed for example in GB-1 438 321.

German Auslegeschrift 1,245,582 discloses an apparatus the function of which is to provide in the pipe wall an aperture having the shape of a helical line. However, the apparatus does not operate in the desired manner. This is due to the fact that since the mandrel having the shape of a helical line is attached to a core, they both rotate in the same direction and at the same speed, whereupon motion also occurs in the direction of the circumference in the mass of plastic, the motion being somewhat slower than the rotating motion of the core. Therefore, there will be no cavity having the shape of a helical line in the pipe wall, but the mandrel tears a duct of an indefinite shape in the wall. Also, since the material in the apparatus is supplied axially into the area of the mandrel, the space between the mandrel and the core will not be filled completely, wherefore the inner surface of the pipe will be uneven.

US 3,464,450 discloses a tubular body for a plastic pipe comprising an outer and an inner wall, which are concentric and defined by rotation surfaces. The tubular body has a ringshaped circular cross sectional area so as to define a gap between the outer and inner wall. The gap has at least two ribs like turns around helicoidal axes inside the gap interconnecting inner and outer wall. The inner and outer wall are extruded by using one and the same material.

The purpose of the present invention is to provide a method enabling the manufacture of pipes having smooth inner and outer surfaces, no welded joints, and walls which comprise cavities of the shape of a helix and partitions that are placed in such a way that despite its light weight the pipe is highly rigid in the direction of both the axis and the radius.

In the method according to independent claim 1 the plastic material is fed into the annular space at the inner end of the mandrel through conical inlet ducts to the interior and exterior of the mandrel, the mandrel that has the shape of a helix being situated in the annular space between the core and the mandrel.

According to the invention, plastic material is fed along conical feed channels into the interior and exterior of the mandrel at its inner end. Some of the plastic material then flows between the mandrel and the core, and this forms the smooth inner surface of the plastic pipe. The twisting of the mandrel with respect to both the casing and the core enables the formation of a cavity having the shape of a helix in the pipe wall.

A preferred embodiment of the invention is characterized in that the mandrel is stopped at times in order to obtain a cavity that is relatively elongated in the longitudinal direction of the pipe, and that the pipe wall is compressed in the area of this cavity. The part of the pipe that is thus compressed can be used for example as a sleeve or in the manufacture of a bent pipe.

In the apparatus according to independent claim 6 at least two conical stators and between them at least one rotatable rotor form between them inlet ducts along which the plastic material can be fed into the exterior and interior of the mandrel.

Since the plastic material is fed, by means of conical stators and a rotary rotor situated between them, into the exterior and interior of the mandrel at its inner end, it is made sure that the subchannels located inside and outside the mandrel are filled with the plastic material. The rotation of the mandrel with respect to the core in turn enables the formation of a cavity with the shape of a helix in the pipe wall.

In order to make sure that the plastic material also flows to the space between the core and the mandrel, it is preferable that the distance between two successive turns of the mandrel is greater at the rear end of the mandrel than at the front end.

If desired, the apparatus can be constructed such that near the end of the feed channel the core comprises a hollow which is connected to the front end of the core by means of an incline that presses the material between the turns of the mandrel. The hollow of the core that is formed in this manner facilitates the flow of the plastic material to the subchannel between the mandrel and the core.

Another advantage of the invention is that when the invention is utilized the plastic pipe will comprise no seams, wherefore it is very easy to for example seal the pipes at the joints.

The pipe of the invention is characterized in that the outer and inner wall are formed of different materials that are joined in the partition.

The apparatus according to the invention will be described in greater detail in the accompanying drawings, in which
Figure 1 is a vertical longitudinal section of a preferred embodiment of the apparatus according to the invention,
Figures 2 and 3 are longitudinal sections of two different embodiments of the pipe wall,
Figure 4 shows a compressed pipe wall,
Figure 5 is a longitudinal section of a third embodiment of the pipe wall, and
Figure 6 shows a second embodiment of the apparatus according to the invention.

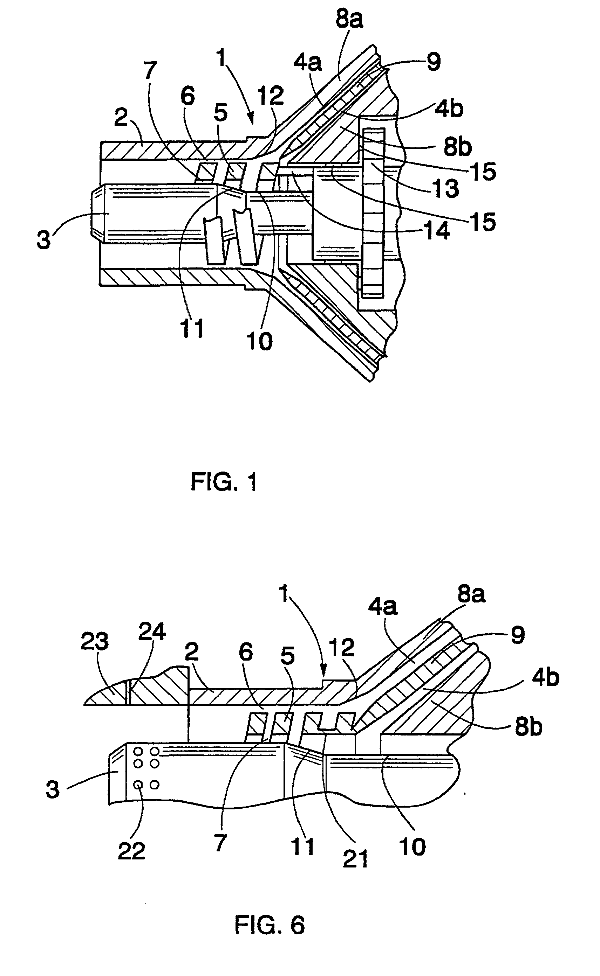

The apparatus shown schematically in Figure 1 comprises a frame 1 with an associated tubular casing 2. A core 3 which is coaxial with the casing 2, which may be fixed or rotating, and which is substantially cylindrical at least at the outer end, is mounted in bearings in the frame 1. The casing 2 is spaced from the core, so that an annular duct is formed between the casing and the core. The front end of this duct forms the nozzle of the apparatus wherein the pipe protrudes out of the apparatus, whereas the rear end is connected to inclining inlet ducts 4a and 4b for plastic. The conical part of the frame 1 forms an outer stator 8a. The interior of the apparatus comprises an inner stator 8b which also has a conical outer edge. A rotatable rotor 9 is placed between the stators 8a and 8b. Means for rotating the rotor 9 are not shown in Figure 1. The rotor 9 and the outer stator 8a border the outer inlet duct 4a for plastic, and correspondingly the rotor 9 and the inner stator 8b border the inner inlet duct 4b for plastic. The rotor 9 and/or the stators 8a and 8b comprise grooves, protrusions or other similar means which cause, during the rotation of the rotor 9, the plastic raw material to advance from the inlet ducts 4a and 4b towards the mandrel 5.

According to the invention, a mandrel 5 having the shape of a helix is placed in the annular space between the casing and the core. The mandrel 5 consists of a pipe having a square cross-section and surrounding the core 3 in such a way that the axis of the helix joins the axis of the core. The mandrel is spaced from both the core 3 and the casing 2, and it thus divides the annular space between the casing and the core into two subchannels 6 and 7, whereupon the subchannel 6 is located between the casing and the mandrel, and the subchannel 7 between the mandrel and the core. The subchannels are preferably equal in size in the direction of the radius.

Figure 1 shows that the distance between the turns of the mandrel is greater at the rear end located at the inlet ducts 4a and 4b than at the front end of the mandrel located at the nozzle of the apparatus. The relatively great distance between the turns of the mandrel at the rear end of the mandrel facilitates the flow of the mass of plastic to the subchannel 7. For the same purpose, a hollow 10 is formed in the core 3 at the rear end of the mandrel, compared to the front end of the core, so that there will be an extension at this point in the subchannel 7. An incline 11 is formed between the hollow 10 and the front of the core, and together with a corresponding incline 12 in the frame this hollow presses the material to the subchannels 6 and 7, and to the spaces between the mandrel turns.

The rear end of the mandrel is connected to a gearwheel 13 with a bar 14, and by means of these components the mandrel can be caused to rotate around its own axis and around the axis of the core. The gearwheel is connected to an actuator that is not shown in the figures. Bearings and seals 15, preventing the plastic from flowing backwards, are placed between the gearwheel 13, the frame 1 and the core 3.

The apparatus according to Figure 1 operates in the following manner:

Plastic supplied under pressure through the ducts 4a and 4b flows into the exterior and interior of the mandrel at its inner end, i.e. to the subchannels 6 and 7, and to the spaces between the turns of the mandrel 5. Due to the pressure in the ducts 4a and 4b and to the rotation of the mandrel 5, the material flows from right to left in Figure 1 and finally issues from the nozzle of the apparatus. The smooth inner and outer surfaces of the pipe wall are thus formed in the subchannels 6 and 7, whereas the mandrel 5 forms a cavity having the shape of a helix between these surfaces. The aperture that remains between the successive turns of the mandrel forms partitions of the pipe wall having the shape of the helix. To enable this, the flow rate of the material must naturally be adapted according to the pitch and rotational velocity of the mandrel. On the other hand, the rotational velocity of the mandrel 5 can be easily adjusted to correspond to the flow rate of the material by means of the gearwheel 13.

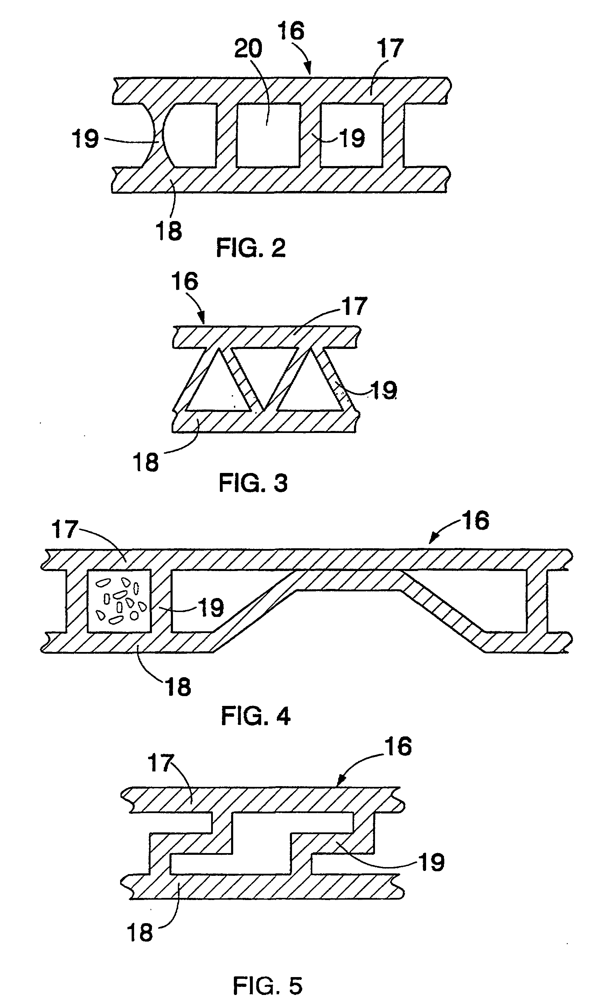

The right side of Figure 2 shows in longitudinal section a part of the wall of the pipe prepared with the apparatus according to Figure 1. The pipe wall 16 thus comprises an outer and inner layer 17 and 18 that are interconnected by means of partitions 19 so that cavities 20 are located between these partitions. Both the partitions 19 and the cavities 20 are thus arranged in the shape of a helix around the axis of the pipe. This kind of wall structure provides savings of 30 to 60% in the material compared to a homogenous pipe wall that is equally rigid in the direction of the radius.

If desired, the cavities 20 can be filled completely or in part for example with a foam-like matter. An inlet is thus formed for this material at the rear end of the tubular mandrel, and the front end of the mandrel is left open so that the material is fed into the interior of the cavity as it issues from the mandrel. In order to reduce the friction between the mandrel and the plastic material, a coating, such as a plastic layer, decreasing the friction can be formed on the surface of the mandrel. Alternatively, apertures through which a lubricant is supplied can be formed in the mandrel.

Figure 1 shows only one mandrel 5, but it is clear that two or more mandrels can be attached to the gearwheel 13, but in such a case the mandrels have to have a greater pitch, however, than the figure shows. The mandrel may naturally be closed instead of tubular.

The left side of Figure 2 shows an alternative form for the partitions 19, and it can be provided by means of mandrel walls that are bent outwards. Such a form of the partition is advantageous with respect to the strength.

Figure 3 shows a pipe wall that is provided with an apparatus comprising two mandrels having the cross-sectional shape of an equilateral triangle. These two mandrels are positioned in such a way that they provide the shape shown in Figure 3 wherein partitions 19 alternately incline in different directions with respect to the surface layer of the wall. It is clear that the mandrels may also have a round cross-section.

Figure 4 shows a pipe wall 16 which is compressed in such a way that the inner and outer layer 17 and 18 are pressed together. This kind of structure is achieved in such a way that the rotational motion of the mandrel 5 is interrupted for a while so that no partitions 19 will be formed in that part of the pipe. The inner layer 18 of the resultant elongated cavity is subjected to a pressure effect, for example by means of compressed air obtained from the apertures 22 in the core 3 (see Figure 5), at the area of the core situated outside the mandrel. The part of the pipe compressed in such a way can be utilized for example as a sleeve or in the formation of a bent pipe.

Figure 5 shows a pipe wall 16 comprising, between the inner and outer layer 17 and 18, partitions 19 with the shape of an angular Z. Partitions 19 having such a shape bend easily, whereupon for example a force acting on the outer layer 17 causes the outer layer 17 to subside and the partitions 19 to yield, but the inner layer 18 remains substantially intact and retains its shape. Therefore, the outer surface 17 of the pipe can be considerably deformed without any effect on the inner surface 18 of the pipe, since the partitions 19 act as kind of buffers between the outer and inner layer 17 and 18, and as a material keeping the layers separate.

Figure 6 shows an alternative embodiment of the apparatus. The mandrel turns located at the inlet end are in this case interconnected by means of material bridges 21 provided in the inner circumference of the mandrel. A uniform screw that conically tapers to the outlet end of the apparatus and that continues outside the inclines 11 and 12 as a mandrel having the shape of a helix is thus formed at the inlet end of the apparatus.

This embodiment enables the manufacture of pipes comprising walls with the inner and outer layer being of different materials or colours in such a way that one material is fed along the outer inlet duct 4a into the exterior of the mandrel at its inner end, i.e. into the subchannel 6, and another material is correspondingly fed along the inner inlet duct 4b into the interior of the mandrel at its inner end, i.e. into the subchannel 7. The different materials are thus joined at the partitions 19. Figure 6 further shows that the mandrel 5 is attached to the rotor 9, whereupon during the rotation of the rotor 9 the mandrel 5 simultaneously rotates at the same speed to the same direction, i.e. the mandrel 5 does not therefore need a rotation mechanism of its own. The flow rate of the material must naturally be carefully adapted then.

Figure 6 also shows how apertures 22 are formed at the free end of the core 3, and the apertures can be connected to a source of negative pressure in order to calibrate the pipe walls, or to a source of compressed air in order to compress the pipe wall.

The plastic pipe can be calibrated in the aforementioned manner from the inside and, if desired, simultaneously also from the outside by means of a cylinder tube calibrator 23. The cylinder tube calibrator 23 comprises openings 24 in order to provide a vacuum. The simultaneous calibration of the interior and the exterior is possible since the partitions 19 can yield slightly, if necessary, without any substantial damage to the structure of the plastic pipe.

If desired, the core 3 and/or the casing 2 can also be made rotatable. It is clear that the plastic material, as well as the fibre particles or crystals contained therein, can also be oriented inside the pipe wall by means of the rotational movement of the mandrel. Further, double-wall pipes with no partitions can be manufactured when the mandrel 5 is not rotated.

Alternatively, the core can be prepared of a pipe that is inserted into the apparatus and through it, and that can be coated by means of the apparatus with an insulating surface layer comprising a cavity having the shape of a helix.

The mandrel can also be mounted in bearings to rotate freely in such a way that the pressure of the mass makes it rotate.

Reinforcing fibres that can be oriented in the direction of the helix can also be fed into the outer layer 17 and the inner layer 18, or into one of the layers. The structural properties of the plastic pipe can thus be considerably improved.

## Claims

1. A method for manufacturing plastic pipes comprising a smooth inner and outer surface and at least one cavity (20) having the shape of a helix and being located in the pipe wall, the turns of the cavity being separated by means of a partition (19) which interconnects the outer and inner wall (17, 18) of the pipe wall, whereupon plastic material is fed through an annular space located between a tubular casing (2) and a core (3) contained therein, the cavity is formed by means of a mandrel (5) that is situated in the annular space, that has the shape of a helix, and that is caused to rotate with respect to the casing (2), the plastic material is fed into the annular space at the inner end of the mandrel (5) through conical inlet ducts (4a, 4b) to the interior and exterior of the mandrel (5), and the mandrel (5) is caused to rotate with respect to the core (3).

2. A method according to claim 1, **characterized in that** the mandrel (5) is stopped at times in order to provide a cavity (20) that is relatively elongated in the longitudinal direction of the pipe, and that the pipe wall (16) is compressed in the area of this cavity.

3. A method according to claim 2, **characterized in that** the pipe wall (16) is compressed by subjecting the inner wall (18) to the effect of compressed air issued from the core (3).

4. A method according to claim 1, **characterized in that** the pipe is coated with an insulating surface layer by pushing the pipe through the apparatus.

5. A method according to claim 1, **characterized in that** the outer and inner surface of the plastic pipe are simultaneously calibrated substantially immediately after the plastic pipe is outside the casing (2).

6. An apparatus for manufacturing pipes of plastic, the apparatus comprising a substantially tubular casing (2), a core (3) that is situated in the casing, that is substantially parallel with the axis of the casing, and that forms an annular space with the casing, at least one mandrel (5) that is situated in the annular space at a distance from the casing (2) and the core (3), that is rotatable with respect to the casing (2), that surrounds the core (3) and that has the shape of a helix, at least two conical stators (8a, 8b) and between them at least one rotatable rotor (9), the stators (8a, 8b) and the rotor (9) forming between them inlet ducts (4a, 4b) along which the plastic material can be fed into the exterior and interior of the mandrel (5), the mandrel being rotatable with respect to the core (3).

7. An apparatus according to claim 6, **characterized in that** the distance between two successive turns of the mandrel (5) is greater at the rear end of the mandrel than at the front end.

8. An apparatus according to claim 6 or 7, **characterized in that** the mandrel (5) is mounted in bearings to rotate freely.

9. An apparatus according to claim 6 or 7, **characterized in that** the mandrel (5) is arranged to rotate closely with the rotor (9).

10. An apparatus according to any one of the preceding claims 6 to 9, **characterized in that** the mandrel turns situated at the inlet end of the apparatus are interconnected by means of material bridges (21) to provide a uniform screw.

11. An apparatus according to any one of the preceding claims 6 to 10, **characterized in that** near the end of the inlet ducts (4a, 4b) the core (3) comprises a hollow (10) which is connected to the front end of the core (3) by means of an incline (11) that presses the material between the turns of the mandrel.

12. An apparatus according to any one of the preceding claims 6 to 11, **characterized in that** the apparatus comprises calibration means, situated substantially immediately after the casing (2); for the simultaneous calibration of both the outer and inner surface of the plastic pipe.

13. A plastic pipe comprising a smooth inner and outer wall (17, 18), and at least one partition (19) that is situated between the walls, that has the shape of a helix, and that is attached to the outer and inner wall, **characterized in that** the outer wall (17) and the inner wall (18) are formed of different materials that are joined in the partition (19).

14. A plastic pipe according to claim 13, **characterized in that** the outer and/or inner wall (17, 18) comprise reinforcing fibres that are oriented parallel with the helix.

15. A plastic pipe according to any one of the preceding claims 13 to 14, **characterized in that** the partition (19) has such a structure that when the outer wall (17) is deformed, the partition (19) yields so that the inner wall (18) is deformed less than the outer wall (17).

16. A plastic pipe according to any one of the preceding claims 13 to 15, **characterized in that** the partition (19) has substantially the cross-sectional shape of an angular Z.

17. A plastic pipe according to any one of the preceding claims 13 to 16, **characterized in that** in some places there are no partitions (19), and that the outer and inner layer (17, 18) of the pipe wall (16) are in contact with each other in such places.

## Patentansprüche

1. Verfahren zu Herstellung von Kunststoffrohren, die eine glatte Innen- sowie Außenfläche und mindestens einen Hohlraum (20), der die Form einer Spirale hat und in der Rohrwand angeordnet ist, aufweisen, wobei die Windungen des Hohlraums mit Hilfe einer Trennwand (19) voneinander getrennt sind, welche die Außen- und die Innenwand (17, 18) der Rohrwand miteinander verbindet, woraufhin durch einen zwischen einem rohrförmigen Gehäuse (2) und einem darin enthaltenen Kern (3) angeordneten ringförmigen Raum Kunststoffwerkstoffzugeführt wird, der Hohlraum mit Hilfe eines Formkerns (5) gebildet wird, der in dem die Form einer Spirale aufweisenden ringförmigen Raum angeordnet ist, und der in Bezug auf das Gehäuse (2) in Drehung versetzt wird, der Kunststoffwerkstoff in den ringförmigen Raum am Innenende des Formkerns (5) durch sich verjüngende Einlasskanäle (4a, 4b) in den Innenraum und in den Außenraum des Formkerns (5) zugeführt wird, und der Formkern (5) dazu gebracht wird, sich in Bezug auf den Kern (3) zu drehen.

2. Verfahren nach Anspruch 1, **dadurch gekennzeichnet, dass** der Formkern (5) von Zeit zu Zeit angehalten wird, um einen Hohlraum (20) zu schaffen, der in Längsrichtung des Rohrs relativ verlängert ist, und dass die Rohrwand (16) im Bereich dieses Hohlraums zusammengedrückt ist.

3. Verfahren nach Anspruch 2, **dadurch gekennzeichnet, dass** die Rohrwand (16) zusammengedrückt wird, indem die Innenwand (18) der Wirkung der aus dem Kern (3) austretenden Druckluft ausgesetzt wird.

4. Verfahren nach Anspruch 1, **dadurch gekennzeichnet, dass** das Rohr mit einer Isolier-Oberflächenschicht beschichtet wird, indem das Rohr durch die Vorrichtung geschoben wird.

5. Verfahren nach Anspruch 1, **dadurch gekennzeichnet, dass** die Außen- und die Innenfläche des Kunststoffrohrs im Wesentlichen unmittelbar nachdem sich das Kunststoffrohr außerhalb des Gehäuses (2) befindet, gleichzeitig kalibriert werden.

6. Vorrichtung zur Herstellung von Rohren aus Kunststoff, wobei die Vorrichtung ein im Wesentlichen rohrförmiges Gehäuse (2), einen in dem Gehäuse angeordneten Kern (3), der im Wesentlichen parallel zu der Achse des Gehäuses liegt und der einen ringförmigen Raum mit dem Gehäuse bildet, mindestens einen Formkern (5), der in dem ringförmigen Raum mit Abstand zu dem Gehäuse (2) und dem Kern (3), der in Bezug auf das Gehäuse (2), das den Kern (3) umgibt und die Form einer Spirale hat, drehbar ist, angeordnet ist, mindestens zwei sich verjüngende Statoren (8a, 8b) und mindestens einen zwischen diesen angeordneten Rotor (9) aufweist, wobei zwischen den Statoren (8a, 8b) und dem Rotor (9) Einlasskanäle (4a, 4b) ausgebildet sind, entlang welchen der Kunststoffwerkstoff in den Außenraum und in den Innenraum des Formkerns (5) zugeführt werden kann, wobei der Formkern in Bezug auf den Kern (3) drehbar ist.

7. Vorrichtung nach Anspruch 6, **dadurch gekennzeichnet, dass** der Abstand zwischen zwei aufeinanderfolgenden Windungen des Formkerns (5) am hinteren Ende des Formkerns Größer ist als am vorderen Ende.

8. Vorrichtung nach Anspruch 6 oder 7, **dadurch gekennzeichnet, dass** der Formkern (5) zur freien Drehung in Lagern befestigt ist.

9. Vorrichtung nach Anspruch 6 oder 7, **dadurch gekennzeichnet, dass** der Formkern (5) so angeordnet ist, dass er sich in engem Abstand mit dem Rotor (9) dreht.

10. Vorrichtung nach einem der vorhergehenden Ansprüche 6 bis 9, **dadurch gekennzeichnet, dass** die an dem Einlassende der Vorrichtung angeordneten Formkern-Windungen mit Hilfe von Werkstoffbrücken (21) zur Schaffung einer gleichförmigen Schraube miteinander verbunden sind.

11. Vorrichtung nach einem der vorhergehenden Ansprüche 6 bis 10, **dadurch gekennzeichnet, dass** in der Nähe des Endes der Einlasskanäle (4, 4b) der Kern (3) eine Vertiefung (10) aufweist, die mit Hilfe einer Neigung (11), die den Werkstoff zwischen die Windungen des Formkerns drückt, mit dem vorderen Ende des Kerns (3) verbunden ist.

12. Vorrichtung nach einem der vorhergehenden Ansprüche 6 bis 11, **dadurch gekennzeichnet, dass** die Vorrichtung eine Kalibriereinrichtung aufweist, die im Wesentlichen unmittelbar nach dem Gehäuse (2) für das gleichzeitige Kalibrieren von sowohl der Außenfläche als auch der Innenfläche des Kunststoffrohrs angeordnet ist.

13. Kunststoffrohr, welches eine glatte Innen- sowie eine glatte Außenwand (17, 18) aufweist, sowie mindestens eine zwischen den Wänden angeordnete Trennwand (19), die die Form einer Spirale hat, und die an der Außenwand und der Innenwand befestigt ist, **dadurch gekennzeichnet, dass** die Außenwand (17) und die Innenwand (18) aus unterschiedlichen Werkstoffen gebildet sind, die in der Trennwand (19) zusammengefügt sind.

14. Kunststoffrohr nach Anspruch 13, **dadurch gekennzeichnet, dass** die Außen- und/oder Innenwand (17, 18) Verstärkungsfasern aufweisen, die parallel zu der Spirale ausgerichtet sind.

15. Kunststoffrohr nach einem der vorhergehenden Ansprüche 13 bis 14, **dadurch gekennzeichnet, dass** die Trennwand (19) einen derartigen Aufbau besitzt, dass, wenn die Außenwand (17) verformt wird, die Trennwand (19) nachgibt, so dass die Innenwand (18) im Vergleich zu der Außenwand (17) geringer verformt wird.

16. Kunststoffrohr nach einem der vorhergehenden Ansprüche 13 bis 15, **dadurch gekennzeichnet, dass** die Trennwand (19) im Wesentlichen die Querschnittsform eines eckigen Z aufweist.

17. Kunststoffrohr nach einem der vorhergehenden Ansprüche 13 bis 16, **dadurch gekennzeichnet, dass** an manchen Stellen keine Trennwände (19) vorgesehen sind, und dass die Außenund die Innenschicht (17, 18) der Rohrwand (16) an derartigen Stellen in Kontakt miteinander sind.

## Revendications

1. Procédé pour la production de tubes en matière plastique comprenant une surface intérieure et une surface extérieure lisses et au moins une cavité (20) présentant la forme d'une hélice et qui est située dans la paroi du tube, les spires de la cavité étant séparées au moyen d'une cloison (19) qui relie les parois intérieure et extérieure (17, 18) de la paroi du tube, dans lequel de la matière plastique est amenée par un espace annulaire situé entre un boîtier tubulaire (2) et un noyau (3) qui y est contenu, procédé dans lequel la cavité est formée au moyen d'un mandrin (5) qui est situé dans l'espace annulaire, qui présente la forme d'une hélice et que l'on fait tourner par rapport au boîtier (2), et la matière plastique est amenée dans l'espace annulaire à l'extrémité intérieure du mandrin (5) par des conduits (4a, 4b) d'entrée coniques jusqu'à l'intérieur et à l'extérieur du mandrin (5), et on fait tourner le mandrin (5) par rapport au noyau (3).

2. Procédé selon la revendication 1 **caractérisé en ce que** le mandrin (5) est arrêté par moments de façon à ménager une cavité (20) qui est relativement allongée dans la direction longitudinale du tube, et **en ce que** la paroi (16) du tube est comprimée dans la zone de cette cavité.

3. Procédé selon la revendication 2 **caractérisé en ce que** la paroi (16) du tube est comprimée en soumettant la paroi intérieure (18) à l'effet d'air comprimé provenant du noyau (3).

4. Procédé selon la revendication 1 **caractérisé en ce que** le tube est revêtu d'une couche superficielle isolante par poussée du tube à travers l'appareil.

5. Procédé selon la revendication 1 **caractérisé en ce que** les surfaces extérieure et intérieure du tube plastique sont simultanément calibrées sensiblement immédiatement après que le tube plastique soit à l'extérieur du boîtier (2).

6. Appareil pour la production de tubes en matière plastique, comprenant un boîtier (2) sensiblement tubulaire, un noyau (3) qui est situé dans le boîtier, qui est sensiblement parallèle à l'axe du boîtier et qui forme un espace annulaire avec le boîtier, au moins un mandrin (5) qui est situé dans l'espace annulaire à distance du boîtier (2) et du noyau (3), qui est rotatif par rapport au boîtier (2), qui entoure le noyau (3) et présente la forme d'une hélice, au moins deux stators coniques (8a, 8b) et entre eux au moins un rotor rotatif (9), les stators (8a, 8b) et le rotor (9) formant entre eux des conduits d'entrée (4a, 4b) le long desquels la matière plastique peut être amenée dans l'extérieur et dans l'intérieur du mandrin (5), le mandrin étant rotatif par rapport au noyau (3).

7. Appareil selon la revendication 6 **caractérisé en ce que** la distance entre deux spires successives du mandrin (5) est plus grande à l'extrémité arrière du mandrin qu'à son extrémité avant.

8. Appareil selon la revendication 6 ou 7 **caractérisé en ce que** le mandrin (5) est monté dans des roulements pour tourner librement.

9. Appareil selon la revendication 6 ou 7 **caractérisé en ce que** le mandrin (5) est agencé pour tourner tout près du rotor (9).

10. Appareil selon l'une quelconque des revendications 6 à 9 **caractérisé en ce que** les spires du mandrin situées à l'extrémité d'entrée de l'appareil sont reliées au moyen de ponts de matière (21) pour fournir une vis uniforme.

11. Appareil selon l'une quelconque des revendications précédentes 6 à 10 **caractérisé en ce que** près de l'extrémité des conduits d'entrée (4a, 4b) le noyau (3) présente un creux (10) qui est relié à l'extrémité avant du noyau (3) au moyen d'une déclivité (11) qui presse la matière entre les spires du mandrin.

12. Appareil selon l'une quelconque des revendications précédentes 6 à 11 **caractérisé en ce que** l'appareil comprend des moyens de calibrage situés sensiblement après le boîtier (2) pour le calibrage simultané à la fois de la surface extérieure et de la surface intérieure du tube en matière plastique.

13. Tube en matière plastique comprenant une paroi intérieure et une paroi extérieure (17, 18) lisses et au moins une cloison (19) qui est située entre les parois, qui présente la forme d'une hélice et qui est attachée à la paroi intérieure et à la paroi extérieure, **caractérisé en ce que** la paroi extérieure (17) et la paroi intérieure (18) sont formées de différents matériaux qui sont réunis dans la cloison (19).

14. Tube en matière plastique selon la revendication 13 **caractérisé en ce que** la paroi extérieure et/ou la paroi intérieure (17, 18) comportent des fibres de renforcement qui sont orientées parallèlement à l'hélice.

15. Tube en matière plastique selon l'une des revendications 13 et 14 **caractérisé en ce que** la cloison (19) présente une structure telle que lorsque la paroi extérieure (17) est déformée, la cloison (19) fléchit de sorte que la paroi intérieure (18) est moins déformée que la paroi extérieure (17).

16. Tube en matière plastique selon l'une quelconque des revendications 13 à 15 **caractérisé en ce que** la cloison (19) présente en coupe transversale sensiblement la forme d'un Z angulaire.

17. Tube en matière plastique selon l'une quelconque des revendications 13 à 16 **caractérisé en ce qu'**en certains emplacements il n'y a pas de cloison (19), et **en ce que** la couche extérieure et la couche intérieure (17, 18) de la paroi (16) du tube sont en contact l'une avec l'autre à de tels emplacements.
